# EUROPEAN PATENT APPLICATION

(11) **EP 1 370 091 A1**
(43) Date of publication of application: **10.12.2003**
(21) Application number: 02077214.1
(22) Date of filing: 06.06.2002
(51) Int. Cl.: H04N 9/64

(54) **Image processing**

(71) Applicant: Koninklijke Philips Electronics N.V., 5621 BA Eindhoven (NL)
(72) Inventor: The designation of the inventor has not yet been filed
(74) Representative: Steenbeek, Leonardus Johannes

(57) **Abstract**

In almost all contemporary TVs peaking techniques are used today to enhance the picture. This means that the edges are sharpened in the luminance channel by using of peaking or peaking-like circuits such as, for instance, luminance transient improvement techniques. By such technique black parts near the edge are usually pushed towards more black color and white parts are pushed towards more white color. As a result the picture appears sharper and crisper. However, the picture also gives a "hard" impression in said parts, the reason for this being that the image signal has been corrected solely with regard to a luminance component and not with regard to a color component. The proposed method aims to increase the saturation level at those parts, in particular by processing the input image signal in a region of an edge location, wherein at least the image characteristics of a color component are corrected by amplifying the color component. Advantageously, the correction of the color component is processed as a function of an original local saturation level, an original local luminance level or a local difference between an original and a peaked image signal. The object of such measures is restricted not only to improving the sharpness of an image but also to improving an overall impression of an image, in particular near edge locations.

## Description

The invention relates to an image processing method and device, and to an image display system.

Image processing, in particular color image processing, is a wide field of technology, wherein a variety of measures are known to be applied to improve image quality, depending on specific application purposes. For instance, US 5,729,360 proposes a color image processing system for generating recorder image signals of four colors containing india ink from three color signals is proposed with specific regard to digital full-color copiers, color facsimile machines and image file systems specifically taking into account the demands of printing techniques.
Image processing with regard to display applications has somewhat different requirements. An essential object of contemporary methods is to enhance the sharpness of edges in an audio/video (A/V) or television (TV) signal. A suitable processing device is proposed in US 4,581,631, wherein solely in order to enhance the sharpness of edges of an image a color-difference signal is stored upon occurrence of an edge until the end of the edge transition together with the value occurring before the edge appeared. At the end of the transition interval a change-over is effected to the new signal value.
Similar generally known techniques are in use to enhance a picture and are limited to measures giving priority to corrections to a luminance component of an image signal. In most contemporary TV or A/V applications today peaking techniques are used to enhance the picture. This means that the edges are sharpened in the luminance channel by the use of peaking circuits. At the position of the luminance transient the transient will be effected to appear sharper by generating an overshoot and/or an undershoot at the edge location. The result is that the contrast is increased locally and the perception of sharpness is enhanced globally. However, a viewer may also have the impression that the color performance is somewhat lower compared to the picture generated without the peaking circuits. Such an impression is an inevitable consequence of the fact that priority is given to the luminance component of the image and little or no or rare compensation is given to the color component to account for the change in the luminance channel. Indeed, locally, the contrast in the luminance component at the edge position has been increased without increasing of the saturation in the color component at this location. This is the reason why a viewer perceives less color.
In fact, proposed schemes of prior art, like the one in US 5,825,938 may suggest additional change of color saturation in a vicinity of an edge location relative to the input image. However, such concepts aim to enhance a sharpness of an image even more. All known concepts are more or less restricted to enhancing the perception of sharpness of an image. This is why US 5,825,938 teaches us to arrange an image display device such that the color saturation of the output image is locally smaller at both sides of the edge than that of the input color image. A human eye perceives special color variations less sharply than special gray variations. Therefore, the presence of a color component reduces the sharpness perceived. By reducing the color saturation, so that the color component is attenuated relative to the gray component, the perception of sharpness can be enhanced.

This is where the invention comes in the object of which is to specify a method and an apparatus to improve overall image quality without being restricting to sharpness enhancement. The invention is defined by the independent claims. The dependent claims define advantageous embodiments.
The term "amplifying" also means "increasing" and also comprises any kind of "improving". "Characteristic" in particular comprises any kind of signal transient.
Color is an extremely important part of most visualizations. The use of good colors for visualizations involves understanding their properties and the perceptional characteristics of human vision. It is therefore also important to implement proper instruments to allow an excellent perception of colors with the aid of computer software and hardware devices.
Saturation refers to the dominance of hue in the color. Unsaturated colors constitute the gray scale running from white to black, including all of the intermediate grays in between. In terms of a spectral definition of color saturation, it is the ratio of the dominant wavelength as compared to other wavelengths within in the color. In an advantageous embodiment, a viewer is given a better impression of color saturation.
In almost all contemporary TVs, peaking techniques are used to enhance the picture. This means that edges are sharpened in the luminance channel by using peaking or peaking-like circuits as, for instance, in the case of luminance transient improvement techniques. Such circuits may generate an overshoot and/or undershoot near the edge location. By such a technique black parts near the edge are usually pushed towards more black color and white parts are pushed towards more white color. As a result, the picture looks appears sharper and crisper. However, the picture also gives a "hard" impression in said parts, the reason for this being that that the image signal has been corrected solely with regard to a luminance component and not with regard to a color component.

The proposed invention has arisen from the desire to remove a hard impression from an image, which is restricted to sharpness enhancement due to prior art methods. It has been realized that a nicer picture cannot be achieved by only improving contrast requirements with regard to a luminance component of an input signal. Instead a saturation quality with regard to a color component of an input image also needs to be improved. This gives the viewer a better overall impression, as not only the perception of sharpness and/or contrast is enhanced, but also the perception of color saturation. The main insight of the proposed concept is therefore to process an image with regard to a color component in a similar way to how as it was processed with regard to a luminance component. In particular, priority of quality improvement is given to a color component of an input image. Advantageously, a luminance component is also improved. At edge locations of an image a color component is enhanced according to the specific demands of an image, particularly if it has been corrected with regard to a luminance component. This results in a more vivid perception of an image, specifically in edge locations regions.
The proposed method aims to increase the saturation level in regions of an edge locations, in particular by processing the input image signal at least in a region of an edge location, wherein at least the image characteristics of a color component are corrected by amplifying the color component. Advantageously, the correction of the color component is processed as a function of an original local saturation level, an original local luminance level or a local difference between an original and a peaked image signal. The object of such measures is not only restricted to improving the sharpness of an image but also to improving an overall impression of an image in particular near edge locations.
Continuously developed configurations are directed towards improving overall image quality in edge locations by processing a color component and improving color saturation in an edge location region. The processing depends on the original local saturation level, and/or an original local luminance level and/or a local difference between an original and a "peaked" picture.

Most advantageously the input image signal indicates image characteristics of a luminance component in addition to image characteristics of a color component. The image characteristics of a luminance component are corrected by peaking the luminance component. "Peaking" specifically implies generating an overshoot and/or an undershoot at a certain location, in particular near an edge location.
The region of the edge location preferably comprises a local area in the input image within and/or identical to and/or at least partially overlapping the edge location, in particular comprising the edge location.
In a preferred configuration the input image signal is a YUV-signal, which indicates image characteristics of a Y-luminance component, image characteristics of a U-color-component and image characteristics of a V-color component. The proposed concept may also be applied to an image, wherein the input image signal is an RGB-signal, which indicates image characteristics of a luminance component, image characteristics of a R-color component and image characteristics of a G-color component and image characteristics of a B-color component. An RGB-signal and a corresponding YUV signal may be transformed to each other by a matrix-operation.
In a further improvement the color component is amplified according to a parameter value and/or a set of parameter values, in particular wherein the parameter value and/or a set thereof is specifically adapted with regard to the color component. In particular the color component may be amplified depending on the signal value of the color component of the input image signal. Additionally or alternatively the color component may also be amplified depending on the signal value of the luminance component of the input image signal. In a preferred improvement the color component is amplified depending on a difference signal value determined from a substantially non-corrected first image characteristic of the input image signal and a corrected second image characteristic of the input image signal, which has been corrected with regard to a luminance component.

Preferred embodiments of the invention will now be described in a detailed description with reference to the accompanying drawings. These are meant to show examples to clarify the inventive concept in connection with the detailed description of the preferred embodiment and in comparison to prior art. While the considered preferred embodiment of the invention will be shown and described, it should of course be understood that various modifications and changes in form or detail could readily be made without departing from the scope of the invention as defined by the independent claims. It is therefore intended that the invention may not be limited to the exact form and detail shown and described herein nor to anything less than the whole of the invention as claimed.

### In the drawings:

Fig. 1 shows a diagram depicting original input image signal components and corrected input image signal components;
Fig. 2 shows a primitive block diagram indicating a difference signal in a preferred embodiment of the proposed method;
Fig. 3 shows a primitive block diagram indicating further details with regard to the difference signal of a preferred embodiment of the proposed method;
Fig. 4 shows a primitive block diagram indicating further details with regard to a preferred embodiment of the proposed method;
Fig. 5 shows a primitive block diagram indicating still further details with regard to a preferred embodiment of the proposed method;
Fig. 6 shows an example of an original picture used as an input image to be processed by a preferred embodiment of the proposed method;
Fig. 7 shows a picture used as an output image merely with sharpness enhancement applied to the original picture of Fig. 6 according to prior art methods; and
Fig. 8 shows a picture used as an output image with peaking sharpness enhancement and with peaking-dependent color correction applied to the original picture and processed according to the preferred embodiment of the proposed method.

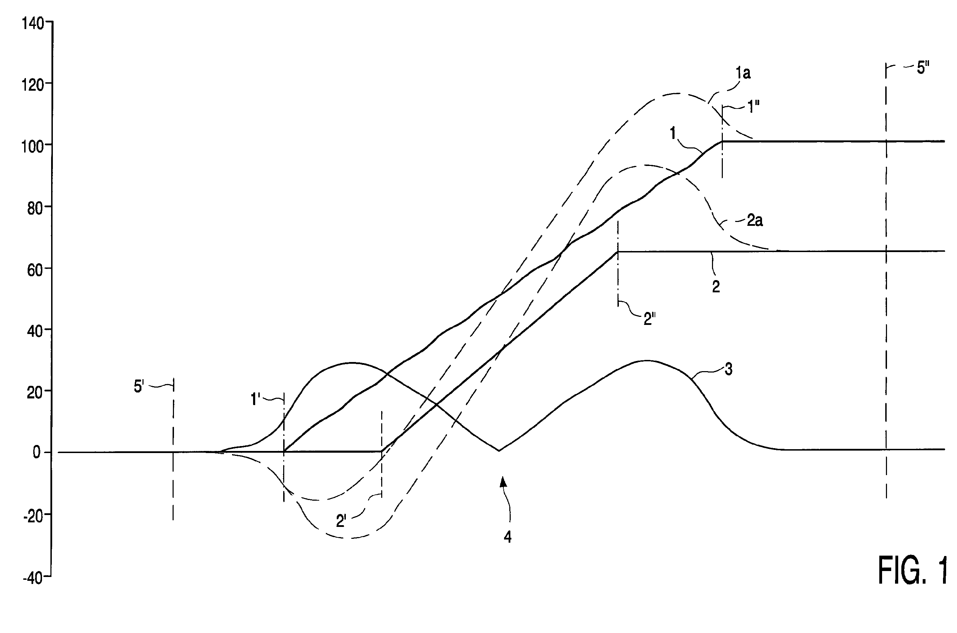

The proposed method aims to increase a saturation level by processing the input image signal at least in a region of an edge location, wherein at least the image characteristics of a color component are corrected by amplification, i.e. improving the color component. This may comprise improving or amplifying a value of a color, the hue of a color and in particular the saturation of a color. Advantageously, the color component correction is processed as a function of an original local saturation level, an original local luminance level or a local difference between an original and a peaked image signal. The object of such measures is not only restricted to improving the sharpness of an image but also to improving an overall impression of an image, in particular near edge locations. The proposed method is also referred to as peaking-dependent color correction (PDC). According to the main idea of the proposed concept of image processing, i.e. to give substantially the same view of color impression on a processed image as on an input image, in a preferred embodiment of the proposed concept a color component is corrected at the same location as the one at which the luminance component has been changed.
A detailed example is depicted in Fig. 1. The diagram shows an input image signal characteristic of a luminance component 1 and an image characteristics of a peaked luminance component 1a respectively. Also the image characteristic of a color component 2 of an input image signal is shown. The image characteristic of a luminance component 1 is used as a first image characteristic of an input image, whereas the image characteristic of a peaked luminance component 1a is used as a second image characteristic of an input image signal corrected with regard to the luminance component. The above-mentioned first and second image characteristics of the input image signal are used to determine a difference signal of the luminance component. In principle, the same applies with regard to the image characteristic of a color component 2 and to the image characteristic of the peaked color component 2a respectively. The image characteristic of the color component 2 is used as a first image characteristic of the input signal and the image characteristic of the peaked color component 2a is used as a second image characteristic of the output signal corrected with regard to a color component. In this particular embodiment the peaked color component 2a is used as the output signal of the image processing.
The luminance component difference signal and the color component signal may be used as a tuning parameter. The color component may be corrected in a preferred embodiment by amplifying a color component as a function of such a tuning parameter. Both the difference signals, either in any combination, or each difference signal individually, may be used as a suitable tuning parameter depending on which color component may be corrected in a further preferred embodiment by amplifying the color component as a function of the tuning parameter.
In Fig. 1 the corrected saturation impression (curve 3) is in relation to the absolute change in the luminance path, which is nothing other than the absolute difference between the signal characteristic of the luminance component 1 and the signal characteristic of the peaked luminance component 1a.

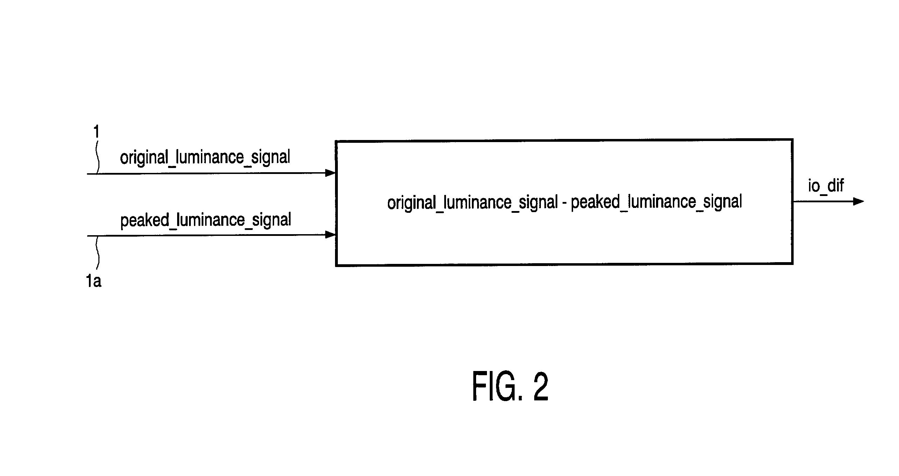

As outlined in Fig. 2 the difference between the original luminance component 1 and the peaked luminance component 1a is used as a tuning parameter io_dif. In the preferred embodiment of the proposed method outlined here the processing of the input image signal is performed in region of an edge location, wherein at least the image characteristics of a color component are corrected by amplifying the color component and in particular in dependence on the difference signal io_dif as outlined above.
An edge location and a region thereof may be defined with regard to the example shown in Fig. 1. An edge location is indicated by reference mark 4 in Fig. 1, whereas the region of the edge location extends along a certain interval or range in an image. Such an interval is limited with regard to the luminance component by the lower boundary 1' and upper boundary 1", whereas the region of the edge location 4 is limited with regard to the color component by the lower boundary 2' and the upper boundary 2". The local area of an edge location 4 may be defined by boundaries 5' and 5" and comprises in the preferred embodiment of Fig. 1 the regions of the edge location 1', 1" with regard to the luminance component and 2', 2" with regard to the color component. For specific applications, however, it may also be advantageous to define a local edge location area 4, which could extend solely within the region of an edge location. It could also be identical to a region of an edge location. It could also possibly be advantageous to use a local area of an edge location 4, which is somewhat in the vicinity of the region of an edge location, but shifted to one or the other side. It would also be possible to define the edge location as the region where the original luminance component 1 is - within certain limits - not equal to the peaked luminance component 1a.

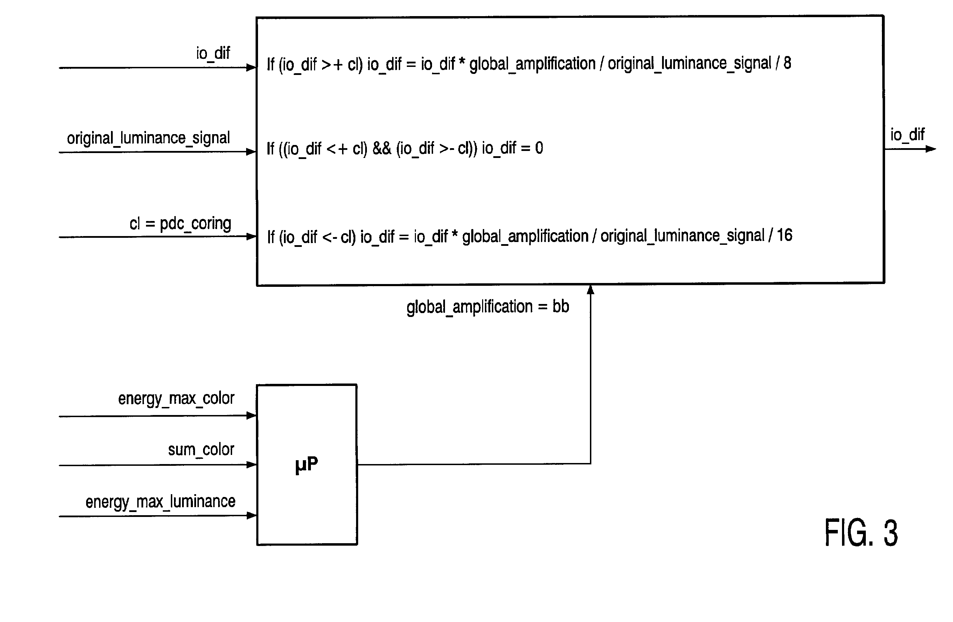

Fig. 3 depicts further processing of the difference signal io_dif as outlined with regard to Figs. 1 and 2 is depicted. In a first modification the difference signal io_dif may be modified by any global amplification factor which is chosen as a function of several parameters indicating the overall energy of the image. In this modification such parameters are in this modification the maximum energy per color, the sum of all colors and the maximum energy of luminance of the image. Such parameters comprise a parameter set applied to a microprocessor µP in Fig. 3 and are used to determine the global amplification factor for modifying the difference signal io_dif. bb is a function of the global energy in the picture. The preferred embodiment of the proposed concept thereby fits into a self-adjusting TV environment, because the mentioned global measurements are implied. The luminance signal energy can be particularly measured and is referred to as energy-max-luminance. A high value means that many transitions are present in the signal, so the color saturation in the section will be reduced. The energy measurement of a color signal measured in one field is referred to as energy-max-color. A low value means that color transitions are marginal, so low correction is needed. A high value means that many color transitions are present or color noise is present in the signal. Thus, the color saturation correction will again be reduced. A global saturation measurement in one field is also referred to as sum-color. A high value means that highly saturated colors are in the picture. A reduced correction is needed in this case.
Also, although not depicted, as highly saturated parts still can be corrected by a high factor, a security has to be built in to prevent an overflow of the color signal.
Further the difference signal can be defined to be zero in the case of a deviation of not more than a predetermined maximum value cl from zero as outlined in the second line of Fig. 3. The parameter pdc-coring equals cl and is used to reduce possible color noise in regions of low saturation. A processing module forming the above-outlined operation uses the difference signal io_dif the original luminance signal original_luminance_signal and the peaking-dependent color signal cl as input values, as well as a parameter set indicating the average energy of the total image. A modified difference signal io_dif is processed as an output value.
With regard to Fig. 3, the first line in the box refers to an undershoot and the last line to an overshoot. The color signal is corrected differently depending on whether it is undershoot or an overshoot.
As outlined with the preferred embodiment of Fig. 3 of the proposed concept the saturation level must be increased more in the black and darker parts than in the white and lighter parts of an image. For instance the red color is increased to a greater extent in a dark part of the image than in a white part of the image. The color in a white line is slightly increased because of the high luminance level and the low original saturation level. Respective parameters for tuning and processing an input image are implemented according to the above outlined preferred embodiment of the proposed concept.

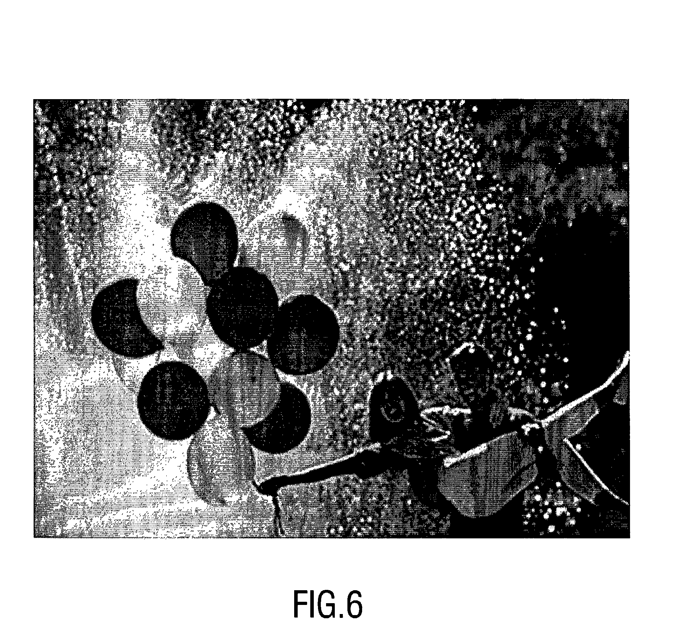

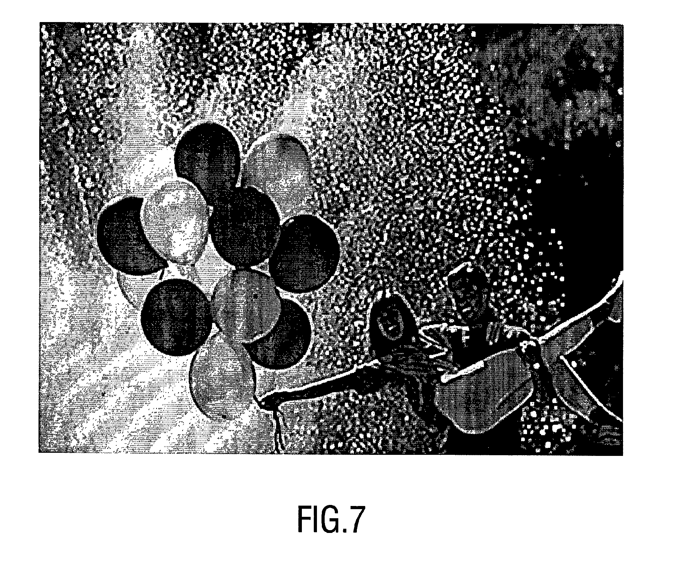

Therefore, in conclusion, the preferred embodiment can be referred to as peaking-dependent color processing and will correct the lack of perceived color as visible in Figs. 6 and 7. The peaking-dependent color algorithm inspects the luminance signal before and after the peaking with regard to luminance components. The size of the difference between the two is used as input for the saturation correction with regard to a color component or a number of color components. The saturation correction with regard to a color component is in relation to the original saturation. The saturation correction depends on the original level of luminance. Also, the preferred embodiment allows a lower saturation correction to be tuned in higher luminance areas, as the picture would otherwise appear too unnatural. These measures have been outlined in general in Fig. 3.

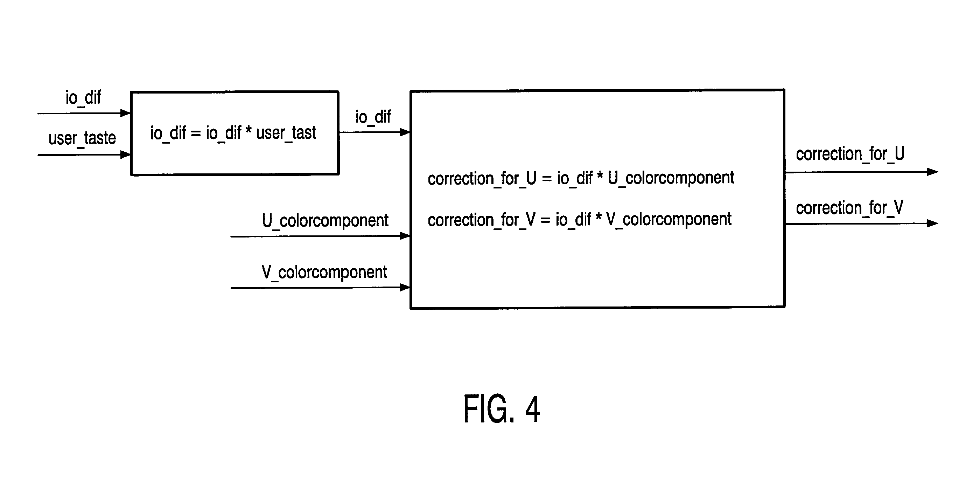

A further module for processing is outlined in Fig. 4. A user taste parameter may also be used to modify the difference signal io_dif. This can be done additionally or alternatively to the modification of Fig. 3. By such a measure, or by any other suitable measure a modified difference signal is used as a factor to correct the U-color component and the V-color component to result in a respective correction for the U-color component and the V-color component. In the modification of Fig. 4 the same difference signal is used for the U-color component and the V-color component. In a still further modification specific difference signals may be used respectively for a U-color component and a V-color component respectively.
The modification of Fig. 4 is also only outlined to demonstrate one possible application. Obviously similar processing can be performed with regard to an RGB input image signal with regard to R-, G- and B- color components. All kind of video-TV inputs can also be processed that way.
With regard to Fig. 4, user_taste is a parameter setting which may be adapted depending on the customer.
With regard to Fig. 4, U_colorcomponent and V_colorcomponent are the original incoming color signals. At this point in the video path the signals have no increased saturation. The correction will be added to the original color signal, which is then further referred to as corrected_U and corrected_V.

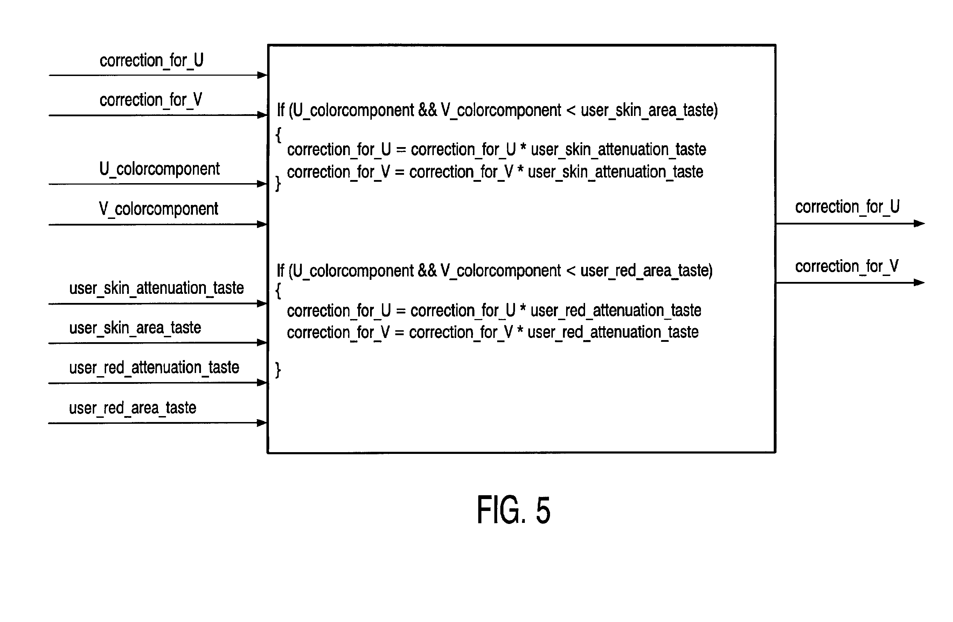

In a further module depicted in Fig. 5, input values of the U- and V-color components are further processed in comparison with threshold values. Such threshold values are defined by taste values with regard to a user skin attenuation and a user red attenuation. In both cases further parameters specifically adapted with regard to a user skin attenuation and a user red attenuation taste are applied to correct a U-color component and a V-color component.
Although not depicted in the Figures, it has been demonstrated by various experiments that corrections in the red areas have to be handled more carefully than other corrections. High corrections in red areas can very quickly lead to an "overdone"-impression. Therefore, an attenuation of the red-correction is implemented also in a further modified embodiment. The parameter User_red_attenuation_taste is the taste of reduction of the peaking-dependent color correction feature in red areas. User_red_area_taste is the definition of the red tone surface in a U/V color plane. From the experiments it has also been deduced that a correction on a skin tone has to be corrected at a lower level otherwise the picture would also appear too unnatural. Again, a skin tone attenuation is built in for this. The parameter user_skin_attenuation_taste is the taste of reduction of the peaking-dependent color correction feature in skin areas. User_skin_area_taste is the definition of the skin tone surface in a U/V color plane.

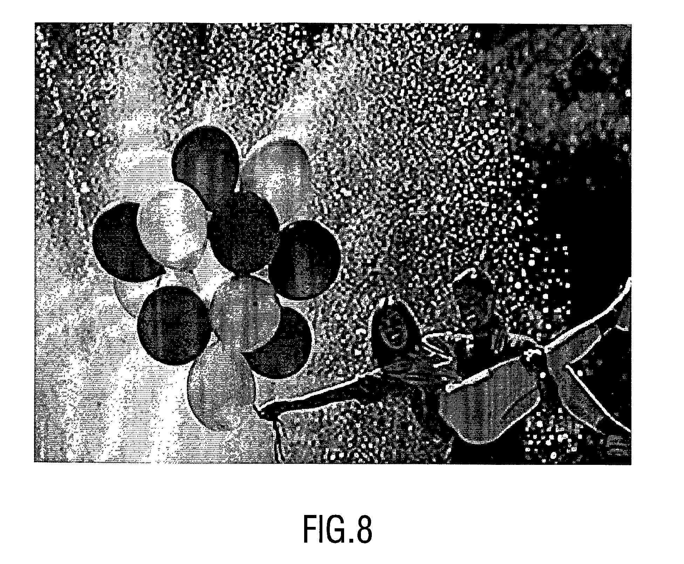

Results of extensive experiments of the above-outlined preferred embodiment of the proposed concept are shown in Figs. 6 to 8, illustrating a sequence of substantially the same picture. Fig. 6 shows an original picture used as an input image. Fig. 7 shows substantially the same input image however processed with regard to sharpness enhancement applied as known from prior art. The image is clearly increased in sharpness, however it also gives a somewhat hard impression, in particular in edge location areas. This is due to a change in the luminance channel but not in the color channel. Sharpness and color correction have been applied by the proposed PDC Method to the picture of Fig. 8 as this results in a better visible impression of saturation and contrast.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware, such as a suitably programmed microprocessor. The mere fact that certain measures are recited in mutually different dependent claims does not indicate that a combination of these measures cannot be used to advantage.

## Claims

1. An image processing method comprising the steps of:
providing an input image signal representing an input image, the input image signal indicating image characteristics of at least a color component,
detecting a region of an edge location in the input image, said edge location being located between regions of different image characteristics, and
processing the input image signal in the region of the edge location to provide an output image signal, the image characteristics of at least the color component being corrected by amplifying the color component.

2. Method as claimed in claim 1, **characterized in that** the color component is amplified according to a parameter value, in particular wherein the parameter value is specifically adapted with regard to the color component.

3. Method as claimed in claim 1, **characterized in that** the color component is amplified depending on the signal value of the color component of the input image signal.

4. Method as claimed in claim 1, **characterized in that** the color component is amplified depending on the signal value of the luminance component of the input image signal.

5. Method as claimed in claim 1, **characterized in that** the color component is amplified depending on a difference signal value determined from a non-corrected first image characteristic of the input image signal and a corrected second image characteristics of the input image signal, which has been corrected with regard to a luminance component.

6. Method as claimed in claim 1, wherein a saturation level is increased in the region of the edge location.

7. Method as claimed in claim 6, wherein the correction of the color component is processed as a function of an original local saturation level, an original local luminance level or a local difference between an original and a peaked image signal.

8. An image processing device comprising:
means for providing an input image signal representing an input image, the input image signal indicating image characteristics of at least a color component,
means for detecting a region of an edge location in the input image, said edge location being located between regions of different image characteristics, and
means for processing the input image signal in the region of the edge location to provide an output image signal, the image characteristics of at least the color component being corrected by amplifying the color component.

9. An image display system comprising:
receiving means adapted to receive an input image signal for further processing, wherein the input image signal represents an input image, wherein the input image signal indicates image characteristics of at least one color component,
edge location signaling means for detecting a region of an edge location in the input image, wherein said edge location is located between regions of different image characteristics,
filter means for processing the input image signal at least in the region of the edge location, wherein the image characteristics of at least the color component are corrected by amplifying the color component, and
an image display device which is adapted to provide an output image signal derived at least from the input image signal, wherein the output image signal represents an output image.
